# EUROPEAN PATENT APPLICATION

(11) **EP 4 454 755 A1**
(43) Date of publication of application: **30.10.2024**
(21) Application number: 24166045.5
(22) Date of filing: 28.07.2015
(51) Int. Cl.: B01J 35/00, B01J 35/66, B01J 29/10, B01J 29/16, C01B 39/24, C10G 47/20, B01J 37/20

(54) **MIDDLE DISTILLATE HYDROCRACKING CATALYST CONTAINING HIGHLY A STABILIZED Y ZEOLITE WITH ENHANCED ACID SITE DISTRIBUTION**

(30) Priority: 31.10.2014 US 201414529794
(62) Divisional of application: 15750865.6
(71) Applicant: Chevron U.S.A. Inc., San Ramon, CA 94583 (US)
(72) Inventor: ZHANG, Yihua, California 94583 (US); MAESEN, Theodorus Ludovicus Michael, California 94583 (US); LACHEEN, Howard Steven, California 94583 (US)
(74) Representative: Haseltine Lake Kempner LLP

(57) **Abstract**

An improved hydrocracking catalyst containing a stabilized Y zeolite (SY) having an enhanced acid site distribution as compared to conventional SY zeolites. The SY zeolite is also characterized as having a high nanopore volume (HNPV).

## Description

### FIELD OF THE INVENTION

Described herein is an improved hydrocracking catalyst containing a stabilized Y zeolite (SY) having an enhanced acid site distribution as compared to conventional SY zeolites. The SY zeolite is also characterized as having a high nanopore volume (HNPV).

Finished hydrocracking catalysts employing the HNPV SY zeolite component exhibit less gas-make (e.g. production of less valuable C₁-C₄ gases), greater hydrogen efficiency, and greater heavy middle distillate product yield (380 - 700°F) and quality, as compared to conventional SY-based hydrocracking catalysts.

### BACKGROUND OF THE INVENTION

Catalytic hydroprocessing refers to petroleum refining processes in which a carbonaceous feedstock is brought into contact with hydrogen and a catalyst, at a higher temperature and pressure, for the purpose of removing undesirable impurities and/or converting the feedstock to an improved product.

Hydrocracking is an important refining process used manufacture middle distillate products boiling in the 250-700°F (121-371°C) range, such as kerosene, and diesel. Hydrocracking feedstocks contain significant amounts of organic sulfur and nitrogen. The sulfur and nitrogen must be removed to meet fuel specifications.

Hydrocrackers have always produced environmentally friendly products, even before environmental regulations on products increased. No other process can take low value, highly aromatic, high sulfur, and high nitrogen feedstocks and produce a full slate of desirable sweet products: LPG, high quality diesel fuel, hydrogen-rich FCC feed, ethylene cracker feed, and/or premium lube unit feedstocks. Modern hydrocracking was commercialized in the early 1960's. These early units converted light feedstocks (from atmospheric crude towers) into high-value, high-demand gasoline products. In addition, high hydrocracker volume gain (exceeding 20%) added significantly to the refinery bottom line. Because of these strong attributes, hydrocracker capacity has increased steadily over the years.

Increased environmental regulations on gasoline and diesel have made hydrocracking the most essential process resulting in ever greater increases in worldwide capacity. The most recent grassroots hydrocrackers were designed to maximize the production of middle distillates from increasingly difficult feedstocks such as FCC light-cycle oil, heavy vacuum gas oils, and heavy coker gas oils. Like their predecessors, most modern hydrocrackers produce high-value, environmentally friendly distillate products including massive volumes of ultra-low sulfur diesel (ULSD), even with progressively more demanding feedstocks. Early generation hydrocrackers were in the 10,000 barrel-per-day range while many new units today exceed 100,000 barrels per day.

Growing demand for middle distillates, declining market for high sulfur fuel oil, and increasingly stringent environmental regulations are putting refineries, especially those with lower Nelson Complexity Index conversion capacity, under immense margin pressures and even forcing many to shut down. This recent trend has led to grassroots projects for distillate-oriented conversion technologies. Very few, if any, refineries have their conversion strategy focused on FCC technology, and many FCC units are operating in low severity distillate mode or occasionally being converted to a propylene producer. Hydrocracking offers greater flexibility to process opportunity crudes while producing premium grade clean fuels which improves refinery margins. Thus, in the last decade alone, more than 90 fixed-bed hydrocracking units have been licensed worldwide. Many of the new refineries and refinery expansions are targeting operating capacities of 400,000 BPSD or higher - which in many cases increases average hydrocracker capacity beyond the conventional single-train capacity of 65,000 to 70,000 BPSD.

Generally, conventional hydrocracking catalyst extrudates are composed of (1) at least one acidic component which can be a crystallized aluminosilicate and/or amorphous silica alumina; (2) a binding material such as alumina, titania, silica, etc; and (3) one or more metals selected from Groups 6 and 8 - 10 of the Periodic Table, particularly nickel, cobalt, molybdenum and tungsten.

There are two broad classes of reactions that occur in the hydrocracking process. The first class of reactions involves hydrotreating, in which impurities such as nitrogen, sulfur, oxygen, and metals are removed from the feedstock. The second class of reactions involves hydrocracking, in which carbon-carbon bonds are cleaved or hydrocracked, in the presence of hydrogen, to yield lower boiling point products.

Hydrocracking catalysts are bi-functional: hydrogenation/dehydrogenation reactions are facilitated by the metal components, and the cracking reaction is facilitated by the solid acid components. Both reactions need the presence of high pressure hydrogen.

During hydrocracking, carbocations are formed by contacting the feedstock with the catalyst. The carbocations undergo isomerization and dehydrogenation to form an olefin, or crack at a beta position to form an olefin and a new carbocation. These intermediate products undergo hydrogenation to form the lower boiling point middle distillate products listed in the table below.

| Middle Distillate Products | Typical Cut Points, °F (°C) For North American Market |
|---|---|
| Light Naphtha | C₅ - 180 (C₅ - 82) |
| Heavy Naphtha | 180 - 300 (82 - 149) |
| Jet | 300 - 380 (149 - 193) |
| Kerosene | 380 - 530 (193 - 277) |
| Diesel | 530 - 700 (277 - 371) |

When conventional SY zeolites are used in hydrocracking processes, less profitable naptha products form from unwanted secondary hydrocracking of materials in the jet boiling range. Accordingly, there is a current need for a hydrocracking catalyst that exhibits a higher degree of selectivity towards production of heavy middle distillate products (380 - 700°F), particularly diesel products.

### SUMMARY OF THE INVENTION

Described herein is an improved finished hydrocracking catalyst containing a high nanopore volume HNPV SY zeolite component. The HNPV SY zeolite is also characterized as having an enhanced acid site distribution as compared to conventional SY zeolites.

The HNPV SY zeolite component employed in the catalyst described herein is characterized as having a greater amount of pores in the 20 - 50 nm range as compared to conventional SY zeolites. The HNPV SY also has an enhanced acid site distribution index factor of between 0.02 and 0.12.

It has been found that by employing SY zeolites having a higher nanopore volume in the 20 - 50 nm range and enhanced acid site distribution described herein below the finished hydrocracking catalyst exhibits a higher selectivity towards the production of heavier middle distillate products in the boiling range of 380 to 700°F (193 to 371 °C), particularly middle distillates in the diesel boiling range.

### BRIEF DESCRIPTION OF THE DRAWINGS

Figure 1 is a transmission electron microscopy (TEM) image of conventional USY used in the preparation of the conventional hydrocracking catalyst prepared in Example 1.
Figure 2 is a TEM image of the HNPV USY used in the preparation of the unique hydrocracking catalyst prepared in Example.
Figure 3 is pore size distribution of the conventional USY and HNPV USY used in the preparation of the hydrocracking catalysts prepared in Example 1, as determined by N2 adsorption.

### DETAILED DESCRIPTION OF THE INVENTION

### Introduction

"Periodic Table" refers to the version of IUPAC Periodic Table of the Elements dated June 22, 2007, and the numbering scheme for the Periodic Table Groups is as described in Chemical and Engineering News, 63(5), 27 (1985).

"Hydroprocessing" or "hydroconversion" refers to a process in which a carbonaceous feedstock is brought into contact with hydrogen and a catalyst, at a higher temperature and pressure, for the purpose of removing undesirable impurities and/or converting the feedstock to a desired product. Such processes include, but not limited to, methanation, water gas shift reactions, hydrogenation, hydrotreating, hydrodesulphurization, hydrodenitrogenation, hydrodemetallation, hydrodearomatization, hydroisomerization, hydrodewaxing and hydrocracking including selective hydrocracking. Depending on the type of hydroprocessing and the reaction conditions, the products of hydroprocessing can show improved physical properties such as improved viscosities, viscosity indices, saturates content, low temperature properties, volatilities and depolarization.

"Hydrocracking" refers to a process in which hydrogenation and dehydrogenation accompanies the cracking/fragmentation of hydrocarbons, e.g., converting heavier hydrocarbons into lighter hydrocarbons, or converting aromatics and/or cycloparaffins (naphthenes) into non-cyclic branched paraffins.

"Column" refers to a distillation column or columns for separating a feedstock into one or more fractions having differing cut points.

"Cut point" refers to the temperature on a True Boiling Point ("TBP") curve (i.e., a batch process curve of percent of feed removed in a heavily refluxed tower versus temperature reached to achieve that removal) at which a predetermined degree of separation is reached.

"True Boiling Point" (TBP) refers to the boiling point of a feed which as determined by ASTM D2887-13.

"Bottoms fraction" means the heavier fraction, separated by fractionation from a feedstock, as a non-vaporized (i.e. residuum) fraction.

"Hydrocracked heavy fraction" means the heavy fraction after having undergone hydrocracking.

"Hydrocarbonaceous" means a compound or substance that contains hydrogen and carbon atoms, but which can include heteroatoms such as oxygen, sulfur or nitrogen.

"Middle distillates" include the following products.

| Products | Typical Cut Points, °F (°C) For North American Market |
|---|---|
| Light Naphtha | C₅ - 180 (C₅ - 82) |
| Heavy Naphtha | 180 - 300 (82 - 149) |
| Jet | 300 - 380 (149 - -193) |
| Kerosene | 380-530 (193-277) |
| Diesel | 530 - 700 (277 - 371) |

"LHSV" means liquid hourly space velocity.

"SCF/BBL" (or scf/bbl, or scfb or SCFB) refers to a unit of standard cubic foot of gas (N₂, H₂, etc.) per barrel of hydrocarbon feed.

"Nanopore" means pores having a diameter between 2 nm and 50 nm, inclusive.

"Stabilized Y zeolite" and "SY" is any Y zeolite with a higher framework silicon content than the starting (as-synthesized) Na-Y precursor. Exemplary SY zeolites include ultra-stabilized Y (USY) zeolites, very ultra-stabilized Y (VUSY) zeolites, and the like.

Where permitted, all publications, patents and patent applications cited in this application are herein incorporated by reference in their entirety; to the extent such disclosure is not inconsistent with the present invention.

Unless otherwise specified, the recitation of a genus of elements, materials or other components, from which an individual component or mixture of components can be selected, is intended to include all possible sub-generic combinations of the listed components and mixtures thereof. Also, "include" and its variants are intended to be non-limiting, such that recitation of items in a list is not to the exclusion of other like items that may also be useful in the materials, compositions and methods of this invention.

All numerical ranges stated herein are inclusive of the lower and upper values stated for the range, unless stated otherwise.

Properties for materials described herein are determined as follows:
(a) Bronsted acidity: determined by isopropylamine-temperature-programmed desorption (IPam TPD) adapted from the published descriptions by T.J. Gricus Kofke, R.K. Gorte, W.E. Farneth, J. Catal. 114, 34-45, 1988; T.J. Gricus Kifke, R.J. Gorte, G.T. Kokotailo, J. Catal. 115, 265-272, 1989; J.G. Tittensor, R.J. Gorte and D.M. Chapman, J. Catal. 138, 714-720, 1992.
(b) SiO₂/Al₂O₃ Ratio (SAR): determined by ICP elemental analysis. A SAR of infinity (∞) represents the case where there is no aluminum in the zeolite, i.e., the mole ratio of silica to alumina is infinity. In that case the molecular sieve is comprised of essentially all of silica.
(c) Surface area: determined by N₂ adsorption at its boiling temperature. BET surface area is calculated by the 5-point method at P/P₀ = 0.050, 0.088, 0.125, 0.163, and 0.200. Samples are first pre-treated at 400°C for 6 hours in the presence of flowing, dry N₂ so as to eliminate any adsorbed volatiles like water or organics.
(d) Nanopore and micropore volume: determined by N₂ adsorption at its boiling temperature. Micropore volume is calculated by the t-plot method at P/P₀ = 0.050, 0.088, 0.125, 0.163, and 0.200. Samples are first pre-treated at 400°C for 6 hours in the presence of flowing, dry N₂ so as to eliminate any adsorbed volatiles like water or organics.
(e) Nanopore diameter: determined by N₂ adsorption at its boiling temperature. Mesopore pore diameter is calculated from N₂ isotherms by the BJH method described in E.P. Barrett, L.G. Joyner and P.P. Halenda, "The determination of pore volume and area distributions in porous substances. I. Computations from nitrogen isotherms." J. Am. Chem. Soc. 73, 373-380, 1951. Samples are first pre-treated at 400°C for 6 hours in the presence of flowing, dry N₂ so as to eliminate any adsorbed volatiles like water or organics.
(f) Total nanopore volume: determined by N₂ adsorption at its boiling temperature at P/P₀ = 0.990. Samples are first pre-treated at 400°C for 6 hours in the presence of flowing, dry N₂ so as to eliminate any adsorbed volatiles like water or organics.
(g) Unit cell size: determined by X-ray powder diffraction.
(h) API gravity: the gravity of a petroleum feedstock/product relative to water, as determined by ASTM D4052-11.
(i) Acid site density: temperature-programmed desorption (TPD) of isopropylamine (IPAm) to quantify the Bronsted acid site distribution of a material is described by Maesen and Hertzenberg, Journal of Catalysis 182, 270-273 (1999).
(j) Acid site distribution and index factor: Acid sites distribution determined by H-D exchange FTIR adapted from the published description by E.J.M Hensen, D. G. Poduval, D.A.J Michel Ligthart, J.A. Rob van Veen, M. S. Rigutto, J.Phys. Chem. C.114, 8363-8374 2010. Prior to FTIR measurement, the sample was heated for 1 hour at 400-450 °C under vacuum <1×10⁻⁵ Torr Then the sample was dosed with C6D6 to equilibrium at 80 °C. Before and after C₆D₆, spectra were collected for OH and OD stretching region. Brönsted acid sites density was determined by using the integrated area of peak 2676 cm⁻¹ as the first high frequency OD (HF), 2653 cm⁻¹ as the 2^{nd} high frequency OD (HF'), 2632 cm⁻¹ and 2620 cm⁻¹ as the first low frequency OD (LF) and 2600 cm⁻¹ as the 2^{nd} low frequency OD (LF'). The acid site distribution index (ASDI) factor was determined by the following equation: ASDI = (HF' + LF')/(HF+LF); which reflects the hyperactive sites content in the zeolite sample.

### Hydrocracking Catalyst Composition

HNPV SY-based hydrocracking catalysts used for carrying out feedstock hydrocracking include a HNPV SY zeolite, a support component, an amorphous silica alumina (ASA) material, one or more metals, and optionally one or more promoters. The composition of the finished HNPV SY catalyst, based on the bulk dry weight of the finished hydrocracking catalyst, is described in Table 1 below.

**TABLE 1**

| | |
|---|---|
| total support content | 10 - 45 wt. % |
| total HNPV SY content | 0.1 - 75 wt. % |
| total ASA | 10 - 45 wt. % |
| total metal oxide content | 15 - 55 wt. % |
| total promoter content | 0 - 10 wt. % |

A HNPV SY used in the manufacture the finished HNPV SY-based hydrocracking catalyst described herein will have a NPV (20 nm - 50 nm) of 0.15 to 0.6 cc/g, and an acid site distribution index (ASDI) factor of between 0.02 and 0.12. In one subembodiment, the HNPV SY has an ADSI of between 0.06 and 0.12. In another subembodiment, the HNPV SY has an ASDI of between 0.08 and 0.11.

A HNPV SY having the unique and enhanced pore size distribution can be made by conventional methods for introducing zeolite porosity, including dealumination or desilication via steaming, acid/base leaching and chemical treatment.

As it will be appreciated by those skilled in the art, the manufacturing process for converting a Y zeolite to the HNPV SY described herein will vary depending on the properties (e.g. particle size, crystal size, alkali content, silica-to-alumina ratio) of the particular Y zeolite employed (i.e. the source manufacturer of the zeolite), the manufacturing equipment installed in the manufacturer's plant for which the manufacturer typically has developed a significant institutional knowledge around their operation and capabilities, and at what step in the manufacturing process the HNPV is introduced (e.g. as-made or following ammonium exchange). With an understanding of the unique pore size distribution described herein, the manufacturer can then vary the operation of their equipment in order to convert a stabilized Y zeolite to a SY having unique HNPV described herein.

Conventionally, as-made Y zeolite and SY (a Y zeolite which has undergone dealumination to produce a stably Y zeolite (SY)) can be converted to its HNPV counterpart via hydrothermal treatment with an aqueous solution having a pH of between 1 and 6, typically at a temperature of between 125 and 900°C, from time periods as short as 5 minutes and as long as 72 hours. Such treatments typically involve post-steaming chemical treatment using an aqueous solution containing species such as acids (HF, S₂SO₄, HNO₃, AcOH), EDTA or (NH₄)₂SiF₆. Manufacturers also use surfactants and pH controlling agents (e.g. NaOH) to control the porosity formation. Pore formation methods are described in the open literature, for example, the method described in US2012/0275993 to Olson.

The ASDI factor is an indicator of the hyperactive site concentration of the zeolite. The distribution of the acid sites of a zeolite generally determines the catalytic activity and selectivity towards a particular refining product.. As the concentrations of these acid sites increase, during commercial operation, the feedstock is subjected to increased hydrocracking, resulting in the production of lesser value products such as naptha and increase gas make (C₁-C₄). Accordingly, it has been founds that the reduction of the concentration of these hyperactive sites (decreased ASDI factor) results in a greater selectivity towards the production of heavier middle distillate products.

Finished hydrocracking catalysts manufactured using a HNPV SY exhibit less gas make, and greater heavy middle distillate product yield and quality as compared to conventional hydrocracking catalysts containing conventional SY-based catalysts.

The HNPV SY zeolites useful in the hydrocracking catalysts described herein are characterized as having the properties described in Table 2 below.

**TABLE 2**

| | **HNPV SY** |
|---|---|
| Mesopore volume (cc/g) | 0.15 - 0.6 |
| NPV - 8 nm - 20 nm (%) | 20 - 30 |
| NPV - 20 nm - 50 nm (%) | 40 - 60 |
| NPV - > 50 nm (%) | 15 - 25 |

For each embodiment described herein, the HNPV SY hydrocracking catalyst support is selected from the group consisting of alumina, silica, zirconia, titanium oxide, magnesium oxide, thorium oxide, beryllium oxide, alumina-silica, alumina-titanium oxide, alumina-magnesium oxide, silica-magnesium oxide, silica-zirconia, silica-thorium oxide, silica-beryllium oxide, silica-titanium oxide, titanium oxide-zirconia, silica-alumina-zirconia, silica-alumina-thorium oxide, silica-alumina-titanium oxide or silica-alumina-magnesium oxide, preferably alumina, silica-alumina, and combinations thereof.

The amount of support material in the finished hydrocracking catalyst is from 10 wt.% to 45 wt.% based on the bulk dry weight of the hydrocracking catalyst. In one subembodiment, the amount of molecular sieve material in the finished hydrocracking catalyst is from 15 wt.% to 35 wt.%.

The amount of molecular sieve material in the finished hydrocracking catalyst is from 0.1 wt.% to 75 wt.% based on the bulk dry weight of the hydrocracking catalyst. In one subembodiment, the amount of molecular sieve material in the finished hydrocracking catalyst is from 5 wt.% to 60 wt.%.

In one embodiment, the HNPV SY zeolite has the properties described in Table 3 below.

**TABLE 3**

| | |
|---|---|
| Bronsted acidity | 0.2 - 1.2 mmol/g |
| ASDI | 0.02 - 0.12 |
| SAR | 15 - 150 |
| surface area | 600 - 900 m²/g |
| micropore volume | 0.25 - 0.40 mL/g |
| unit cell size | 24.15 - 24.35 Å |

In another embodiment, the HNPV SY zeolite has the properties described in Table 4 below.

**TABLE 4**

| | |
|---|---|
| SAR | 10 - ∞ |
| micropore volume | 0.15 - 0.27 mL/g |
| BET surface area | 700 - 825 m²/g |
| unit cell size | 24.15 - 24.45 Å |

As described herein above, the HNPV SY-based finished hydrocracking catalyst described herein contains one or more metals. For each embodiment described herein, each metal employed is selected from the group consisting of elements from Group 6 and Groups 8 through 10 of the Periodic Table, and mixtures thereof. In one subembodiment, each metal is selected from the group consisting of nickel (Ni), cobalt (Co), iron (Fe), chromium (Cr), molybdenum (Mo), tungsten (W), and mixtures thereof. In another subembodiment, the hydrocracking catalyst contains at least one Group 6 metal and at least one metal selected from Groups 8 through 10 of the Periodic Table. Exemplary metal combinations include Ni/Mo/W, Ni/Mo, Ni/W, Co/Mo, Co/W, Co/W/Mo and Ni/Co/W/Mo.

The total amount of metal oxide material in the finished hydrocracking catalyst is from 15 wt.% to 55 wt.% based on the bulk dry weight of the hydrocracking catalyst. In one subembodiment, the hydrocracking catalyst contains from 3 wt.% to 5 wt.% of nickel oxide and from 15 wt.% to 35 wt.% of tungsten oxide based on the bulk dry weight of the hydrocracking catalyst.

The finished hydrocracking catalyst described herein may contain one or more promoters selected from the group consisting of phosphorous (P), boron (B), fluorine (F), silicon (Si), aluminum (Al), zinc (Zn), manganese (Mn), and mixtures thereof. The amount of promoter in the hydrocracking catalyst is from 0 wt.% to 10 wt.% based on the bulk dry weight of the hydrocracking catalyst. In one subembodiment, the amount of promoter in the hydrocracking catalyst is from 1 wt.% to 5 wt.% based on the bulk dry weight of the hydrocracking catalyst.

### Hydrocracking Catalyst Preparation

In general, the hydrocracking catalyst described herein is prepared by:
(a) mixing and pepertizing the HNPV SY, ASA and support to make an extrudate base;
(b) impregnate the base with a metal impregnation solution containing at least one metal; and
(c) post-treating the extrudates, including subjecting the metal-loaded extrudates to drying and calcination.

Prior to impregnation, the extrudate base is dried at temperature between 90°C and 150°C (194°F - 302°F) for 1-12 hours, followed by calcination at one or more temperatures between 350°C and 700°C (662°F - 1292°F).

The impregnation solution is made by dissolving metal precursors in deionized water. The concentration of the solution was determined by the pore volume of the support and metal loading. During a typical impregnation, the support is exposed to the impregnation solution for 0.1-10 hours. After soaking for another 0.1-10 hours, the catalyst is dried at one or more temperatures in the range of 38°C - 149°C (100°F - 300°F) for 0.1-10 hours. The catalyst is further calcined at one or more temperatures in the range of 316°C - 649°C (600°F - 1200°F), with the presence of sufficient air flow, for 0.1-10 hours.

In one embodiment, the impregnation solution further contains a modifying agent for promoting the deposition of the at least one metal. Modifying agents, as well as methods of making hydrocracking catalysts using such modifying agents, are disclosed in U.S. Publication Nos. 20110000824 and 20110132807 to Zhan et al., published January 6, 2011 and June 9, 2011, respectively.

### Hydrocracking Overview

The hydrocracking catalyst described herein is suitable for hydroprocessing a variety of hydrocarbonaceous feedstocks, including disadvantaged feedstocks that are normally not conducive to middle distillate production using a conventional one- or two-stage hydrocracking process, such as visbroken gas oils, heavy coker gas oils, gas oils derived from residue hydrocracking or residue desulfurization, other thermally cracked oils, de-asphalted oils, Fischer-Tropsch derived feedstocks, cycle oils from an FCC unit, heavy coal-derived distillates, coal gasification byproduct tars, and heavy shale-derived oils, organic waste oils such as those from pulp/paper mills or waste biomass pyrolysis units.

Table 5 below lists the typical physical properties for a feedstock suitable for manufacturing middle distillates using the catalyst described herein, and Table 6 illustrates the typical hydrocracking process conditions.

**TABLE 5**

| | Feedstock |
|---|---|
| Properties | |
| Gravity, °API | 13.5 - 22.0 |
| N, ppm | 0.5 - 2,000 |
| S, wt% | 0 - 3 |
| Polycyclic index (PCI) | 1500 - 3000 |
| Distillation Boiling Point Range °F (°C) | 700 - 1200 (371 - 649) |

**TABLE 6**

| Hydrocracking Conditions | |
|---|---|
| Liquid hourly space velocity (LHSV) | 0.1 - 5 hr⁻¹ |
| H₂ partial pressure | 800 - 3,500 psig |
| H₂ consumption rate | 200 - 20,000 SCF/Bbl |
| H₂ recirculation rate | 50 - 5,000 SCF/Bbl |
| Operating temperature | 200 - 500°C (392 - 932°F) |
| Conversion (%) | 30 - 90 |

Prior to introduction of the hydroprocessing feed, the catalyst is activated by contacting with petroleum liquid containing sulfiding agent at a temperature of 200°F to 800°F (66°C to 482°C) from 1 hour to 7 days, and under a H₂-containing gas pressure of 100 kPa to 25,000 kPa. Suitable sulfiding agents include elemental sulfur, ammonium sulfide, ammonium polysulfide ([(NH₄)₂S]ₓ), ammonium thiosulfate ((NH₄)₂S₂O₃), sodium thiosulfate (Na₂S₂O₃), thiourea CSN₂H₄, carbon disulfide, dimethyl disulfide (DMDS), dimethyl sulfide (DMS), dibutyl polysulfide (DBPS), mercaptanes, tertiarybutyl polysulfide (PSTB), tertiarynonyl polysulfide (PSTN), aqueous ammonium sulfide.

As noted above, the finished hydrocracking catalysts employing using the novel HNPV SY component exhibit improved hydrogen efficiency, and greater heavy middle distillate product yield and quality as compared to conventional hydrocracking catalysts containing conventional SY.

Depending on the feedstock, target product slate and amount of available hydrogen, the catalyst described herein can be used alone or in combination with other conventional hydrocracking catalysts.

In one embodiment, the catalyst is deployed in one or more fixed beds in a single stage hydrocracking unit, with or without recycle (once-through). Optionally, the single-stage hydrocracking unit may employ multiple single-stage units operated in parallel.

In another embodiment, the catalyst is deployed in one or more beds and units in a two-stage hydrocracking unit, with and without intermediate stage separation, and with or without recycle. Two-stage hydrocracking units can be operated using a full conversion configuration (meaning all of the hydrotreating and hydrocracking is accomplished within the hydrocracking loop via recycle). This embodiment may employ one or more distillation units within the hydrocracking loop for the purpose of stripping off product prior to the second stage hydrocracking step or prior to recycle of the distillation bottoms back to the first and/or second stage.

Two stage hydrocracking units can also be operated in a partial conversion configuration (meaning one or more distillation units are positioned within hydrocracking loop for the purpose of stripping of one or more streams that are passed on for further hydroprocessing). Operation of the hydrocracking unit in this manner allows a refinery to hydroprocess highly disadvantaged feedstocks by allowing undesirable feed components such as the polynuclear aromatics, nitrogen and sulfur species (which deactivate hydrocracking catalysts) to pass out of the hydrocracking loop for processing by equipment better suited for processing these components, e.g. an FCC unit.

In one embodiment, the catalyst is used in the first stage and optionally the second stage of a partial conversion, two-stage hydrocracking configuration which is well suited for making at least one middle distillate and a heavy vacuum gas fluidized catalytic cracking feedstock (HVGO FCC), by:
(a) hydrocracking a hydrocarbonaceous feedstock to produce a first stage hydrocracked effluent;
(b) distilling the hydrocracked feedstock by atmospheric distillation to form at least one middle distillate fraction and an atmospheric bottoms fraction;
(c) further distilling the atmospheric bottoms fraction by vacuum distillation to form a side-cut vacuum gas oil fraction and a heavy vacuum gas oil FCC feedstock;
(d) hydrocracking the side-cut vacuum gas oil fraction to form a second stage hydrocracked effluent; and
(e) combining the second stage hydrocracked effluent with the first stage hydrocracked effluent.

The refinery configuration illustrated above has several advantages over conventional two-stage hydrocracking schemes. First, in this configuration, the catalyst and operating conditions of the first stage are selected to yield a HVGO FCC stream having only the minimum feed qualities necessary to produce FCC products which meet the established commercial specifications. This is in contrast to a conventional two-stage hydrocracking scheme where the first stage hydrocracking unit is operated at a severity necessary to maximize distillate yield which, in turn, requires the unit to be operated at more severe conditions (which requires more hydrogen and reduces the life of the catalyst).

Second, the side-cut VGO sent to the second stage hydrocracker unit is cleaner and easier to hydrocrack than a conventional second stage hydrocracker feed. Therefore, higher quality middle distillate products can be achieved using a smaller volume of second stage hydrocracking catalyst which, in turn, allows for the construction of a smaller hydrocracker reactor and consumption of less hydrogen. The second stage hydrocracking unit configuration reduces construction cost, lowers catalyst fill cost and operating cost.

### Products

The process of this invention is especially useful in the production of middle distillate fractions boiling in the range of about 380-700°F (193 - 371°C). At least 75 vol%, preferably at least 85 vol% of the components of the middle distillate have a normal boiling point of greater than 380 °F (193°C). At least about 75 vol%, preferably 85 vol% of the components of the middle distillate have a normal boiling point of less than 700°F (371°C).

Gasoline or naphtha may also be produced in the process of this invention. Gasoline or naphtha normally boils in the range below 380°F (193°C) but boiling above the boiling point of C₅ hydrocarbons, and sometimes referred to as a C₅ to 400°F (204°C) boiling range. Boiling ranges of various product fractions recovered in any particular refinery will vary with such factors as the characteristics of the crude oil source, local refinery markets and product prices.

The following examples will serve to illustrate, but not limit this invention.

### EXAMPLE 1

### Preparation of Hydrocracking Catalysts

A conventional USY-based hydrocracking catalyst was prepared by following procedure. 56.4 wt-% USY as described herein above, 21 wt-% amorphous silicoaluminate powder (Siral-30 from Sasol), and 22.6 wt-% pseudo-boehmite alumina powder (CATAPAL C1 from Sasol) were mixed well. To this mix, a diluted HNO₃ acid aqueous solution (3 wt. %) was added to form an extrudable paste. The paste was extruded in 1/16" asymmetric quadrolobe shape, and dried at 248°F (120°C) for 1 hour. The dried extrudates were calcined at 1100°F (593°C) for 1 hour with purging excess dry air, and cooled down to room temperature.

Impregnation of Ni and W was performed using a solution containing ammonium metatungstate and nickel nitrate in concentrations equal to the target metal loadings of 3.8 wt. % NiO and 25.3 wt. % WO₃ based on the bulk dry weight of the finished catalyst. Then the extrudates were dried at 270°F (132°C) for 1 hour. The dried extrudates were then calcined at 950°F (510°C) for 1 hour with purging excess dry air, and cooled down to room temperature.

A HNPV USY-based finished hydrocracking catalyst was prepared by following procedure as described for Example 1 except 56.4 wt-% of a HNPV USY was used instead of the conventional USY.

The physical properties of the conventional and HNPV USY materials, and their acid site distributions after H-D exchange, are listed in Tables 7 and 8 below.

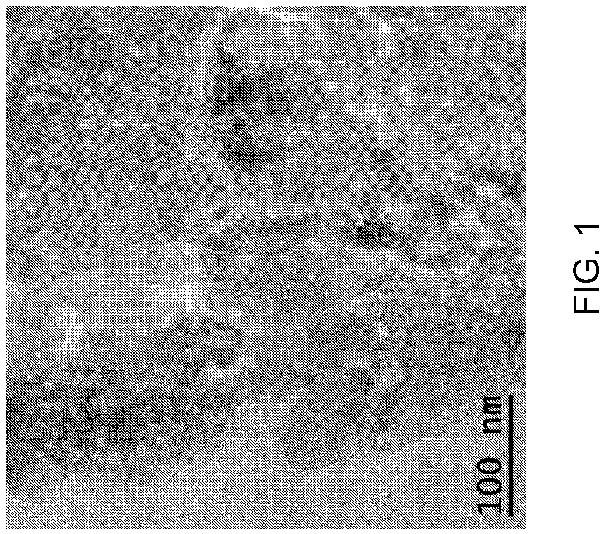

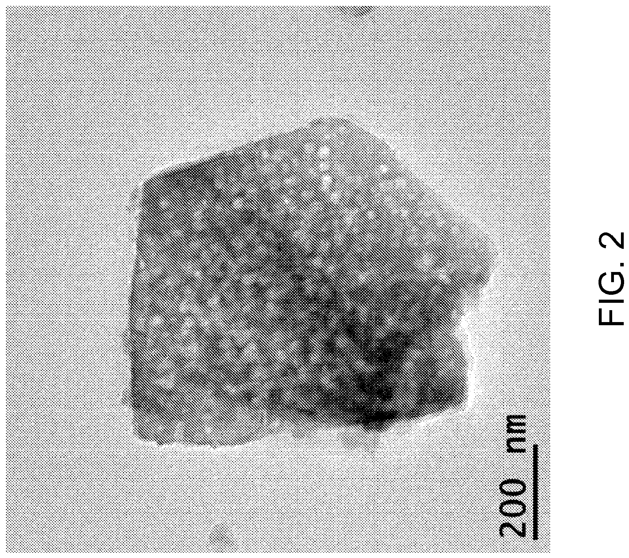

Prior to incorporation into the finished catalysts, the conventional USY and HNPV USY zeolites were analyzed by transmission electron microscopy (TEM). The TEM images for the conventional USY and HNPV USY are presented in Figures 1 and 2, respectively.

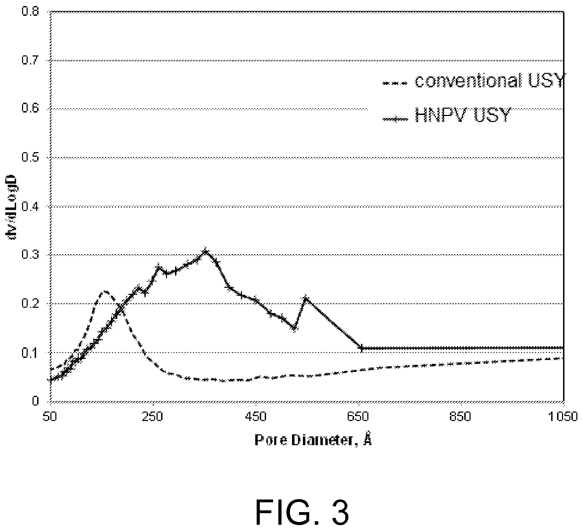

In addition, the pore size distributions were determined for the conventional USY and HNPV zeolites. A plot of the pore size distributions for the two zeolites is presented in Figure 3.

OD acidity was determined by the amount of bridged hydroxyl groups exchanged with deuterated benzene at 80°C, which is measured by FT-IR.

**TABLE 7**

| **USY** | **conventional USY** | **HNPV USY** |
|---|---|---|
| Mesopore volume (cc/g) | 0.11 | 0.18 |
| NPV - 8 nm - 20 nm (cc/g) | 49.5 | 25.7 |
| NPV - 20 nm - 50 nm (cc/g) | 20.8 | 53.2 |
| NPV - > 50 nm (cc/g) | 18.1 | 21.1 |
| unit cell size (Å) | 24.28 | 24.29 |
| silica/alumina ratio | 30 | 30- |

**TABLE 8**

| | **conventional USY** | **HNPV USY** |
|---|---|---|
| Brönsted acid sites determined by FTIR after H-D exchange (mmol/g) | | |
| HF(OD) | 0.184 | 0.153 |
| HF'(OD) | 0.027 | 0.017 |
| LF(OD) | 0.096 | 0.0507 |
| LF'(OD) | 0.008 | 0.006 |
| Total | 0.316 | 0.227 |
| ASDI | 0.13 | 0.11 |

### EXAMPLE 2

### Hydrocracking Performance

The conventional USY-based and HNPV USY-based catalysts were used to process a typical Middle Eastern VGO. The feed properties are listed in Table 11. The run was operated in pilot plant unit under 2300 psig total pressure and 1.0 - 2.2 LHSV. The feed was passed a catalyst bed filled with hydrotreating catalyst before flowing into the hydrocracking zone. Prior to introduction of feed, the catalysts were activated either with DMDS (gas phase sulphiding) or with a diesel feed spiked with DMDS (liquid phase sulphiding).

The feed quality and test results are noted below in Tables 9 and 10. As Table 10 indicates, the HNPV USY-based catalyst has shown improved activity and selectivity to distillate product. Diesel yield was increased by 2.6 % and the yield to gas and naphtha was reduced.

Further, the HNPV USY-based catalyst produced less undesirable gas and light ends (C₄- and C₅ - 180°F) compared to the conventional USY catalyst. Further, the desirable middle distillate (380 - 700°F) yield for the HNPV USY-based catalyst was higher than conventional USY catalysts.

**TABLE 9**

| | | **Feedstock** |
|---|---|---|
| | Properties | |
| | Gravity, °API | 21 |
| | N, ppm | 1140 |
| | S, wt% | 2.3 |
| | Polycyclic index (PCI) | 2333 |

| | Distillation Temperature (wt%), °F (°C) | |
|---|---|---|
| | 5 | 708 (376) |
| | 10 | 742 (394) |
| | 30 | 810 (432) |
| | 50 | 861 (461) |
| | 70 | 913 (489) |
| | 90 | 981 (527) |
| | 95 | 1008 (542) |
| | Entire product | 1069 (576) |

**TABLE 10**

| **CATALYST** | **conventional USY-based catalyst** | **HNPV USY-based catalyst** |
|---|---|---|
| CAT, °F (60% conv.) | base | -5 |

| Yields - by cut point | | |
|---|---|---|
| C₄-, wt% | 3.2 | 1.7 |
| C₅ - 180°F, Iv% | 7.2 | 6.8 |
| 180 - 380°F, Iv% | 30.3 | 28.1 |
| middle distillates 380 - 700°F, Iv% | 34.2 | 36.8 |

While the invention has been described in detail and with reference to specific embodiments thereof, it will be apparent to one skilled in the art that various changes and modifications can be made without departing from the spirit and scope of the invention.

For the avoidance of doubt, the present application is directed to the subject-matter described in the following numbered paragraphs (referred to as "Para"):
1. A hydrocracking catalyst, comprising:
   a support;
   an amorphous silica alumina material;
   a stabilized Y zeolite having an acid site distribution index factor of between 0.02 and 0.12; and
   at least one metal selected from the group consisting of elements from Group 6 and Groups 8 through 10 of the Periodic Table.
2. The hydrocracking catalyst of Para 1, wherein the stabilized Y zeolite is a high nanopore volume stabilized Y zeolite having a nanopore volume in the 20 nm to 50 nm range of 0.15 to 0.6 cc/g.
3. The hydrocracking catalyst of Para 2, wherein 20 to 30% of the nanopores are in the 8 nm to 20 nm range.
4. The hydrocracking catalyst of Para 2, wherein 40 to 60% of the nanopores are in the 20 nm to 50 nm range.
5. The hydrocracking catalyst of Para 2, wherein 15 to 25% of the nanopores are greater than 50 nm.
6. The hydrocracking catalyst of Para 1, wherein high nanopore volume stabilized Y zeolite has an acid site distribution index factor of between 0.06 and 0.12.
7. The hydrocracking catalyst of Para 1, wherein high nanopore volume stabilized Y zeolite has an acid site distribution index factor of between 0.08 and 0.11.
8. A process for hydrocracking a hydrocarbonaceous feedstock, comprising contacting the feedstock with a hydrocracking catalyst under hydrocracking conditions to produce a hydrocracked effluent;
   the hydrocracking catalyst comprising
   a support;
   an amorphous silica alumina material;
   a stabilized Y zeolite having an acid site distribution index factor of between 0.02 and 0.12; and
   at least one metal selected from the group consisting of elements from Group 6 and Groups 8 through 10 of the Periodic Table.
9. The process of Para 8, wherein the stabilized Y zeolite is a high nanopore volume stabilized Y zeolite having a nanopore volume in the 20 nm to 50 nm range of 0.15 to 0.6 cc/g.
10. The process of Para 9, wherein 20 to 30% of the nanopores are in the 8 nm to 20 nm range.
11. The process of Para 9, wherein 40 to 60% of the nanopores are in the 20 nm to 50 nm range.
12. The process of Para 9, wherein 15 to 25% of the nanopores are greater than 50 nm.
13. The process of Para 8, wherein high nanopore volume stabilized Y zeolite has an acid site distribution index factor of between 0.06 and 0.12.
14. The process of Para 8, wherein high nanopore volume stabilized Y zeolite has an acid site distribution index factor of between 0.08 and 0.11.
15. The process of Para 8, wherein the hydrocracked effluent is a heavy middle distillate product in the 380 to 700°F range.

## Claims

1. A hydrocracking catalyst, comprising:
a support;
an amorphous silica alumina material;
a stabilized Y zeolite having an acid site distribution index factor of between 0.02 and 0.12, wherein the stabilized Y zeolite is a high nanopore volume stabilized Y zeolite having a nanopore volume in the 20 nm to 50 nm range of 0.15 to 0.6 cc/g; wherein:
20 to 30% of the nanopores are in the 8 nm to 20 nm range,
40 to 60% of the nanopores are in the 20 nm to 50 nm range, and
15 to 25% of the nanopores are greater than 50 nm; and
at least one metal selected from the group consisting of elements from Group 6 and Groups 8 through 10 of the Periodic Table.

2. The hydrocracking catalyst of Claim 1, wherein high nanopore volume stabilized Y zeolite has an acid site distribution index factor of between 0.06 and 0.12.

3. The hydrocracking catalyst of Claim 1, wherein high nanopore volume stabilized Y zeolite has an acid site distribution index factor of between 0.08 and 0.11.

4. A process for hydrocracking a hydrocarbonaceous feedstock, comprising contacting the feedstock with a hydrocracking catalyst under hydrocracking conditions to produce a hydrocracked effluent;
the hydrocracking catalyst comprising
a support;
an amorphous silica alumina material;
a stabilized Y zeolite having an acid site distribution index factor of between 0.02 and 0.12, wherein the stabilized Y zeolite is a high nanopore volume stabilized Y zeolite having a nanopore volume in the 20 nm to 50 nm range of 0.15 to 0.6 cc/g, wherein:
20 to 30% of the nanopores are in the 8 nm to 20 nm range,
40 to 60% of the nanopores are in the 20 nm to 50 nm range, and
15 to 25% of the nanopores are greater than 50 nm; and
at least one metal selected from the group consisting of elements from Group 6 and Groups 8 through 10 of the Periodic Table.

5. The process of Claim 4, wherein high nanopore volume stabilized Y zeolite has an acid site distribution index factor of between 0.06 and 0.12.

6. The process of Claim 4, wherein high nanopore volume stabilized Y zeolite has an acid site distribution index factor of between 0.08 and 0.11.

7. The process of Claim 4, wherein the hydrocracked effluent is a heavy middle distillate product in the 380 to 700°F range.

8. The process according to any one of claims 5 to 7, wherein hydrocracking conditions include:
| | |
|---|---|
| Liquid hourly space velocity (LHSV) | 0.1 - 5 hr⁻¹ |
| H₂ partial pressure | 800 - 3,500 psig |
| H₂ consumption rate | 200 - 20,000 SCF/Bbl |
| H₂ recirculation rate | 50 - 5,000 SCF/Bbl |
| Operating temperature | 200 - 500°C (392 - 932°F) |
| Conversion (%) | 30 - 90 |

9. The process according to any one of claims 5 to 8, wherein the catalyst is deployed in one or more fixed beds in a single stage hydrocracking unit, with or without recycle, optionally wherein the single-stage hydrocracking unit may employ multiple single-stage units operated in parallel.

10. The process according to any one of claims 5 to 8, wherein the catalyst is deployed in one or more beds and units in a two-stage hydrocracking unit, with and without intermediate stage separation, and with or without recycle.

11. A process for making the hydrocracking catalyst according to claim 1, the process comprising:
(a) mixing and pepertizing the HNPV SY, ASA and support to make an extrudate base;
(b) impregnate the base with a metal impregnation solution containing the at least one metal; and
(c) post-treating the extrudates, including subjecting the metal-loaded extrudates to drying and calcination.

12. The process of claim 11, wherein prior to impregnation, the extrudate base is dried at temperature between 90°C and 150°C (194°F - 302°F) for 1-12 hours, followed by calcination at one or more temperatures between 350°C and 700°C (662°F - 1292°F).
